# EUROPÄISCHE PATENTSCHRIFT

(11) **EP 0 515 450 B1**
(45) Veröffentlichungstag und Bekanntmachung des Hinweises auf die Patenterteilung: **10.09.1997**
(21) Anmeldenummer: 91903884.4
(22) Anmeldetag: 13.02.1991
(51) Int. Cl.: B01D 46/34, B01D 53/08, B01D 53/34, B01J 8/08

(54) **VERFAHREN UND VORRICHTUNG ZUM BEHANDELN VON FLUIDEN MITTELS EINES ALS SCHÜTTGUT VORLIEGENDEN FESTSTOFFES IM GEGENSTROMVERFAHREN**
PROCESS AND DEVICE FOR TREATING FLUIDS BY MEANS OF A POURABLE SOLID BY THE COUNTERFLOW METHOD
PROCEDE ET DISPOSITIF DE TRAITEMENT DE FLUIDES AU MOYEN D'UNE MATIERE SOLIDE SOUS FORME DE MATIERE EN VRAC SELON UN PROCESSUS A CONTRE-COURANT

(30) Priorität: 16.02.1990 DE 4004911
(43) Veröffentlichungstag der Anmeldung: 02.12.1992
(73) Patentinhaber: GROCHOWSKI, Horst, D-46117 Oberhausen (DE)
(72) Erfinder: GROCHOWSKI, Horst, D-46117 Oberhausen (DE)
(74) Vertreter: Schumacher, Horst, Dr. Dipl.-Phys.
(86) Internationale Anmeldenummer: EP9100275
(87) Internationale Veröffentlichungsnummer: WO9112069

(56) Entgegenhaltungen:
- DE-A- 3 228 984
- DE-A- 3 305 585
- DE-A- 3 406 413
- DE-A- 3 528 222
- DE-A- 3 732 567
- DE-A- 3 916 325

## Beschreibung

Die Erfindung betrifft ein Verfahren gemäß dem Oberbegriff von Anspruch 1 und eine zur Durchführung des Verfahrens geeignete Vorrichtung. Bei bekannten Verfahren zum Reinigen von Rauchgasen wird dieses in der Regel durch zwei, vorzugsweise sogar durch drei Reinigungsstufen geführt, wobei in der Regel in den beiden letzten Reinigungsstufen ein adsorptiv und/oder katalytisch wirkendes Schüttgut verwendet wird.

So ist es z. B. zum Reinigen von Rauchgasen bekannt, daß diese, in der Regel nach einer sogenannten Naßreinigung, an einem ersten Schüttgut, insbesondere einem Herdofenkoks, von Verunreinigungskomponenten wie HCl und/oder SOₓ und/oder Schwermetallen, insbesondere Hg, möglichst vollständig befreit werden. In einer nachfolgenden Reinigungsstufe wird das zuvor gereinigte Rauchgas, vorzugsweise an einem Aktivkoks oder einer Aktivkohle aus Steinkohlen auf katalytischem Wege von Stickoxiden (NOₓ) gereinigt. Dies geschieht unter Zufuhr von Ammonik (NH₃) als Reaktionspartner. Bei dieser Reaktion entstehen H₂O und N₂. Diese zweistufige Reinigung an einem Schüttgut ist sehr aufwendig, wird aber wegen der komplexen Reaktionen der beteiligten Komponenten allgemein für erforderlich gehalten.

Während der beladene Herdofenkoks regelmäßig abgezogen, regeneriert, verbrannt oder endgelagert werden muß, kann die letzte Reinigungsstufe (Entstickung) in der Regel wie ein Festbett betrieben werden. Obwohl es sich in dieser Stufe um eine katalytische Reaktion handelt, hat sich ein gelegentlicher Schüttgutaustausch als erforderlich erwiesen.

Neben den vielfältigen Reaktionsmöglichkeiten der beteiligten Komponenten bereitet die Anwesenheit von feinteiligen Verunreinigungen, insbesondere Stäuben u. dgl., erhebliche Probleme beim Betrieb der bekannten Schüttgutreaktoren.

Bei den bekannten Rauchgasreinigungsverfahren tritt ferner das Problem auf, daß in der Reaktionskammer Zonen verminderten Schüttgutaustausches vorhanden sind. Dieses Problem tritt vor allem bei quer angeströmten Wanderbettreaktoren auf, bei denen jalousieartige Fluideintritt- und Fluidaustrittswände vorgesehen sind. Dort liegen die schüttgutaustauscharmen Zonen im Bereich der Jalousieblenden. In schüttgutaustauscharmen Zonen der Reaktionskammer kann es u. a. zu Verklebungen, Anbackungen und ähnlichen Agglomerationen des Schüttgutes kommen, welche den Druckverlust in der Schüttgutschicht im Laufe der Zeit immer mehr erhöhen. Das Problem schüttgutaustauscharmer Zonen in der Reaktionskammer ist aber grundsätzlich beherrschbar. Hierzu ist ein im Gegenstrom betreibbarer Wanderbettreaktor mit einem speziellen Anströmboden vorgeschlagen worden (WO 8808746).

Auch dann, wenn das Problem schüttgutaustauscharmer Zonen in der Reaktionskammer gelöst wird - sei es bei quer angeströmten oder sei es bei im Gegenstrom betriebenen Reaktionskammern - bereitet ein weiteres Problem erhebliche Schwierigkeiten beim Betreiben des Schüttgutreaktors: Unter bestimmten Bedingungen kann es nämlich zu einem "Quellen" der Schüttgutpartikel kommen. Z. B. führt die gleichzeitige Anwesenheit von Stickoxiden, Ammoniak und "sauren" anorganischen Verbindung, wie SO₂, 2 SO₃, HCl, HF oder dergleichen unter bestimmten Reaktionsbedingungen zu einem "Quellen" der aus Kohle oder Koks bestehenden Schüttgutpartikel (Popcornbildung). Die Schüttgutpartikel können das doppelte ihrer Dicke, d. h. das Achtfache ihres Volumens erlangen. Diese Reaktion wird vor allem in der Fluideintrittszone in die Schüttgutschicht beobachtet. Dieses "Popcorn" setzt nicht nur den Reaktor zu, sondern es führt auch zu Problemen beim Abzug der gequollenem Schüttgutpartikel, weil dieses "Popcorn" mechanisch sehr instabil ist und beim Abziehen deshalb leicht zerfällt.

Davon ausgehend liegt der Erfindung die **Aufgabe** zugrunde, ein Verfahren und eine Vorrichtung der eingangs genannten Art unter möglichst weitgehender Vermeidung der vorerwähnten Nachteile möglichst weitgehend zu verbessern. Insbesondere ist es erwünscht, das Verfahren möglichst wenig aufwendig zu gestalten und Probleme zu beherrschen, die mit staubbelasteten zu behandelnden Gasen entstehen.

Diese Aufgabe wird hinsichtlich eines Verfahrens durch die Merkmalskombination nach Anspruch 1 gelöst, wobei das Gegenstromverfahren Anwendung findet, d. h. daß ein Schüttgut von oben nach unten als Schüttgutschicht durch Reaktionskammern wandert und wenigstens ein Fluid von unten nach oben durch die Schüttgutschicht in der Reaktionskammer strömt; hierbei wird bevorzugt ein Anströmboden verwendet, der das Fluid über den Querschnitt der Reaktionskammer verteilt und das mehr oder minder verbrauchte Schüttgut nach unten durchläßt, so daß es unterhalb des Anströmbodens abgezogen werden kann.

Durch die Erfindung wird u. a. erreicht, daß selbst bei hohen Partikelbelastungen im zu behandelnden Fluid und/oder bei Verfahrensbedingungen, bei denen Anbackungen des Schüttgutes an Reaktionskammerteilen, Agglomerationen von Schüttgutpartikeln und/oder Quellungen von Schüttgutbartikeln auftreten bzw. auftreten können, der behandlungsaktive Teil der Schüttgutschicht weder hinsichtlich seiner Behandlungs- bzw. Beladungsaktivität eingeschränkt wird noon Ungleichmäßigkeiten und/oder Erhöhungen des Druckverlustes des Fluides innerhalb der Schüttgutschicht auftreten, die Leistungsfähigkeit der Fluidbehandlung also auch bei seht ungünstigen Ausgangsbedingungen stets voll erhalten bleibt. Die Erfindung ermöglicht ferner die Verwirklichung vergleisweise hoher Fluidströmungsgeschwindigkeiten in der Schüttgutschicht.

Besonders vorteilhaft wirkt sich die erfindungsgemäße Verfahrensweise beim Gegenstrom verfahren aus.

"Popkorn" bildet sich allenfalls am Gaseintritt, wo es aber beim Gegenstrom verfahren unmittelbar abgezogen werden kann - und wird -, so daß es nicht lange in der Schicht verweilt.

Wenn erfindungsgemäß alle Reaktionskammern parallel zueinander betrieben werden und der Schüttgutabzug und die Schüttgutnachführung aus den bzw. in die Schüttgutschichten von Reaktionskammer zu Reaktionskammer zeitlich versetzt zueinander, insbesondere vollständig nacheinander, erfolgt und der betreffende Fluidstrom auf die übrigen Reaktionskammern verteilt wird, wird dadurch eine völlig kontinuierliche Fluidbehandlung gewährleistet.

Demgegenüber ist es aus der - nicht gattungsbildenden - DE-A-33 05 585 lediglich bekannt, bei der Filtration von heißen Rohgasen die Filtergehäuse reihum zu entleeren und völig neu zu befüllen. Hierfür muß ein zusätzliches Filtergehäuse verfügbar sein, das ein Umlenken des Fluidstromes von einem verbrauchten auf einen frischen Filter gestattet.

Wenn nach einer weiteren Ausführungsform der Erfindung (nach Anspruch 2) insgesamt mehrere Verunreinigungskomponenten aus einem Rauchgas mit Hilfe eines einzigen Schüttgutes in einem einzigen Reinigungsschritt nach dem trockenen Gegenstromverfahren entfernt werden und dabei das Abziehen und Nachführen des Schüttgutes absatzweise in im wesentlichen planparallelen Schichten erfolgt, werden dadurch u. a. folgende Vorteile erzielt: Erstens wird der Aufwand für das Errichten und Betreiben einer zweistufigen trockenen Gasreinigungsanlage auf eine einzige Stufe vermindert. Natürlich kann dieser einzigen Stufe - wie auch bei dem bekannten zweistufigen trockenen Reinigungsverfahren - eine Naßreinigungsstufe oder eine ähnliche Vorreinigungsstufe vorgeschaltet sein. Zweitens werden sämtliche Verunreinigungen des zu behandelnden Gases in besonders konzentrierter Form mit dem beladenen bzw. verbrauchten Schüttgut aus dem Prozeß ausgeschieden. Drittens bilden sich für den Reinigungsprozeß besonders günstige Konzentrationsprofile der abzuscheidenden Komponenten innerhalb der Schüttgutschicht aus, wobei insbesondere eine außerordentlich hohe Endbeladung des aus der Schüttgutschicht abzuziehenden Schüttgutes erreicht wird.

Während es z. B. bei der Rauchgasreinigung von Müllverbrennungsanlagen bisher erforderlich war, in einer ersten trockenen Rauchgasreinigungsstufe mittels eines Herdofenkokses HCl, SO₂, Schwermetalle, insbesondere Hg, Dioxine und/oder dgl. abzuscheiden und in einer zweiten trockenen Gasreinigungsstufe NOₓ unter Zugabe von Ammoniak mit Hilfe von Steinkohlenaktivkoks als Schüttgut katalytisch umzuwandeln, ist es nach der Erfindung, insbesondere gemäß Anspruch 2, nunmehr möglich, in der einzigen trockenen Reinigungsstufe im Gegenstromverfahren nicht nur ein einziges Schüttgut zu verwenden, sondern auch noch eine gewisse Wahlfreiheit hinsichtlich der Art und Eigenschaften dieses Schüttgutes zu erhalten. So ist es bei dem erfindungsgemäßen Verfahren u. a. möglich, ausschließlich Herdofenkoks, ausschließlich Steinkohlenaktivkoks oder ausschließlich einen Zeolithen oder insbesondere aus anorganischen Bestandteilen bestehende, insbesondere bei relativ tiefen Temperaturen wirksame Katalysatoren als Schüttgutmaterial zu verwenden. Bei dem vorerwähnten Beispiel der Rauchgasreinigung hinter Müllverbrennungsanlagen ist es dann lediglich erforderlich, etwas mehr Ammoniak als im Falle einer zweistufigen trockenen Gasreinigung einzusetzen. - Grundsätzlich ist es natürlich auch möglich, mit der erfindungsgemäßen Verfahrensweise nach den Ansprüchen auch ein zweistufiges trockenes Gasreinigungsverfahren, insbesondere im Gegenstrom, zu betreiben. In solchen Fällen ist die Verwendung eines speziellen mehrstufigen Reaktors, wie er in der DE-A-39 16 325 im einzelnen beschrieben ist, von Vorteil.

Wenn gemäß einer weiteren Ausführungsform der Erfindung ein spezieller Anströmboden (nach Anspruch 3) verwendet wird, wie er im übrigen in der WO 8808746 beschrieben ist, wird dadurch u. a. erreicht, daß jeweils nur außerordentlich geringe Schüttgutmengen aus der Schüttgutschicht abgezogen und nachgeführt werden müssen. Bei diesem Anströmboden werden nämlich die Probleme der Kontaminierung des Schüttgutes besonders gut beherrscht, da die am meisten belastete Schüttgutschicht sich bereits im Austragsbereich des Anströmbodens befindet. Obwohl es bei diesem Anströmboden möglich ist, die Schüttgutschicht nur um wenige Millimeter, z. B. 1 bis 100 mm in einem Arbeitsgang durch Schüttgutabzug abzusenken, werden staub-, verklebungs- und/oder quellungsbelastete und/oder mit den Verunreinigungen hoch belastete Schüttgutpartikel problemlos und in im wesentlichen planparalleler Form aus der Schüttgutschicht abgezogen - und zwar auch dann, wenn der Anströmboden sehr großflächig ist. Im übrigen können bei einen derartigen Anströmboden die Phasen des Schüttgutabzuges und der Schüttgutnachführung außerordentlich kurz gehalten werden , z.B. weniger als eine Minute einmal pro Tag oder Woche, und kann die abzuziehende Schüttgutmenge außerordentlich klein gehalten werden.

Wenn gemäß einer weiteren Ausführungsform der Erfindung (nach Anspruch 4) das Abziehen von Schüttgut aus der Schüttgutschicht der Reaktionskammer in mindestens zwei nacheinander geschalteten Arbeitstakten erfolgt, wobei die in diesen einzelnen Arbeitstakten abgezogenen Schüttgutmengen voneinander getrennt werden, kann dadurch eine gesonderte Schüttgutentsorgung für unterschiedlich kontaminierte Schüttgutpartikel verwirklicht werden, obwohl die Fluidbehandlung in der betreffenden Schüttgutschicht einstufig erfolgt. Hierdurch können z. B. in der Fluideintrittszone des Reaktionsraumes bzw. des Anströmbodens konzentriert niedergeschlagener Staub, konzentriert niedergeschlagene Schwermetalle, insbesondere Quecksilber, und/oder sich in dieser Zone bildende Schüttgutagglomationen bzw. gequollene Schüttgüter gesondert ausgeschleust und entsorgt werden, während in dem oder den nachgeschalteten Arbeitstakt/en abgezogene Schüttgutmengen, z. B. für einen nachfolgenden Regenerationsschritt od. dgl., aus der Reaktionskammer ausgeschleust werden. Natürlich können sich etwa bildende Schichten unterschiedlicher Schadstoffkontamination, die sich während der Fluidbehandlung einstellen, auch getrennt voneinander abgezogen, z. B. zunächst eine vor allem mit SO₂ beladene Schicht und nachfolgend eine vor allem mit HCl beladene Schicht. Bei dieser Vorgehensweise ist es möglich, die Unterbrechung des Zustromes an zu behandelndem Fluid lediglich bei einem Teil der einzelnen Arbeitstakte vorzunehmen. Grundsätzlich ist das Verfahren nach Anspruch 4 sogar dazu geeignet, auch ohne die Vorgehensweise nach Anspruch 1 sowie insbesondere in Kombination mit den Vorgehensweisen der übrigen Ansprüche bzw. der Beschreibung der hier vorliegenden Offenbarung in vorteilhafter Weise eingesetzt zu werden.

Hinsichtlich einer Vorrichtung zum Durchführen des erfindungsgemäßen Verfahrens, bei der die Vorrichtung zumindest aus einer Reaktionskammer mit Zu- und Abführungen für das Schüttgut sowie zumindest einer Fluidzuströmöffnung und zumindest einer Fluidabströmöffnung besteht, wird die Aufgabe durch eine Vorrichtung nach Anspruch 6 gelöst.

Vorzugsweise sind die Verschlußblende (Absperrorgan für Fluid) und deren Betätigungseinrichtungen für das Durchführen der Verfahrensschritte nach den Ansprüchen 1 bis 4 ausgebildet.

Die vorgenannten sowie die beanspruchten und in dem nachfolgenden Ausführungsbeispiel beschriebenen erfindungsgemäß zu verwendenden Bauteile bzw. Verfahrensschritte unterliegen in ihrer Größe, Formgestaltung, Materialauswahl und technischen Konzeption bzw. den Verfahrensbedingungen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der bevorzugte Ausführungsformen einer erfindungsgemäßen Behandlungsvorrichtung im Zusammenhang mit einer Rauchgasreinigung für Müllverbrennungsanlagen beispielhaft dargestellt sind.

In der Zeichnung zeigen:
Fig. 1 einen Wanderbettreaktor zur Reinigung der Rauchgase aus einer Müllverbrennunsanlage im Vertikalschnitt (Schnitt entlang der Linie I-I gemäß Fig. 2) - schematisch dargestellt;
Fig. 2 von demselben Wanderbettreaktor eine horizontale Schnittansicht in Höhe der Linie II-II gemäß Fig. 1 oder 3 - und zwar unter Fortlassung der Schüttgutaustragsrohre;
Fig. 3 von demselben Wanderbettreaktor eine vertikale Schnittansicht in Richtung der Pfeile III-III gemäß Fig. 1 bzw. 2, wobei Teile der Anströmböden schematisch angedeutet sind sowie
Fig. 4 eine alternative Ausführungsform einer Fluidzuströmanordnung zu einem Anströmboden für einen Wanderbettreaktor.

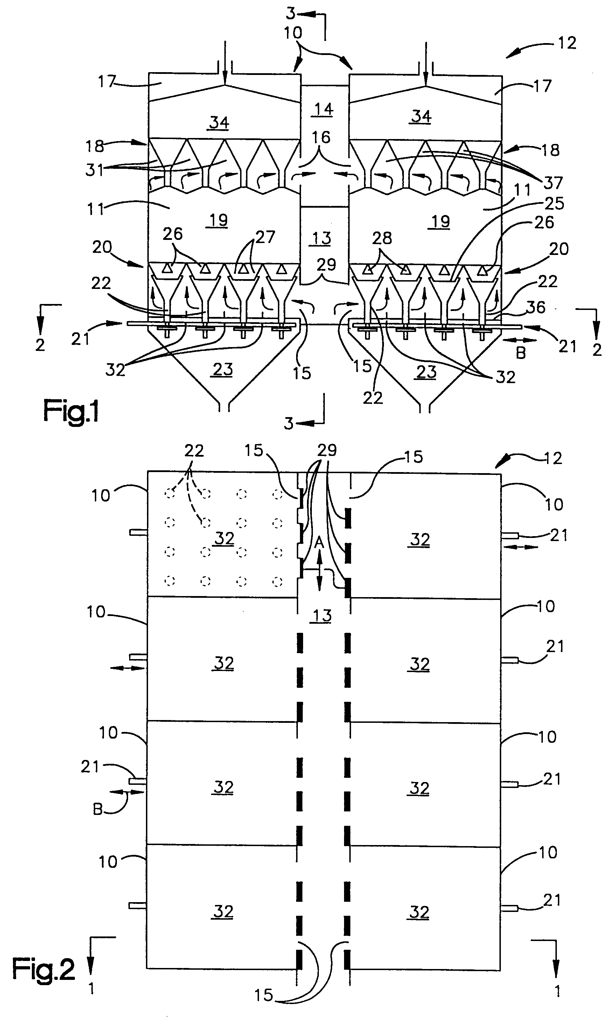

In Fig. 1 bis 3 ist ein aus insgesamt acht parallel geschalteten Behandlungsreaktoren 10 bestehender Wanderbettreaktor 12 schematisch dargestellt. Hierbei sind in zwei zueinander parallelen Reihen jeweils vier Behandlungsreaktoren Wand an Wand nebeneinander aufgestellt. Diese beiden Reihen sind durch einen unteren Gaseintrittskanal 13 und einen unmittelbar darüber liegenden Gasaustrittskanal 14 voneinander getrennt. Beide Kanäle dienen als Sammelkanäle, die über Fluidzuströmöffnungen 15 bzw. Fluidabströmöffnungen 16 mit allen acht Behandlungsreaktoren 10 fluidisch verbunden sind. Anstatt Wand an Wand nebeneinander aufgestellt zu sein, können die Behandlungsreaktoren auch getrennt voneinander aufgestellt und mit eigenen Zu- und Abführleitungen für das Fluid versehen sein, die z. B. an eine Sammelleitung angeschlossen sind.

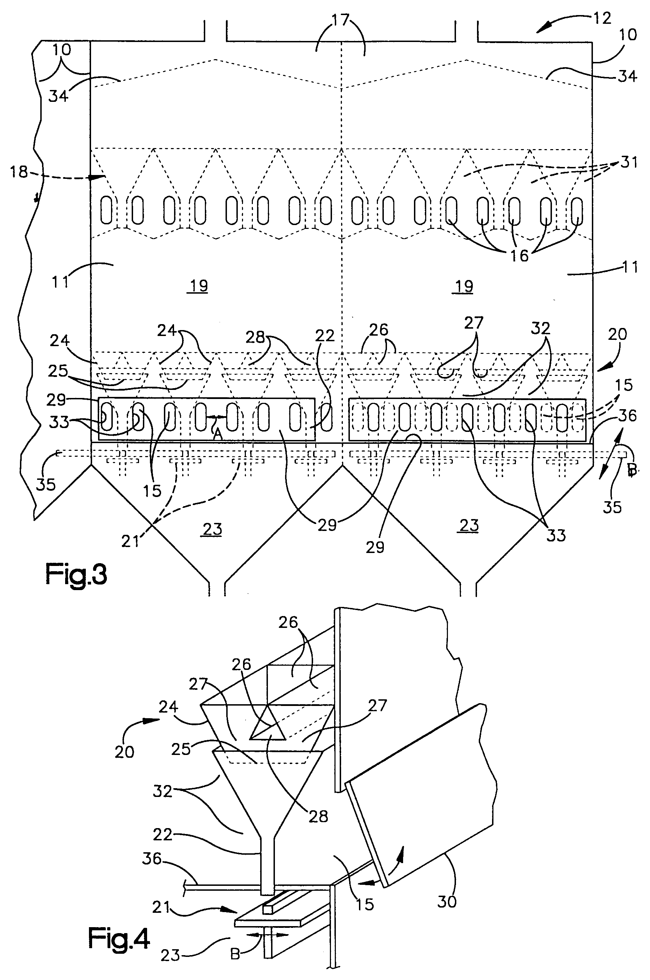

Jeder einzelne Behandlungsreaktor weist einen Schüttgutvorratsbunker 17, einen Schüttgutverteilboden 18 mit einem integrierten und mit den Fluidabströmöffnungen 16 verbundenen Fluidsammelraum 31, eine über den Reaktorquerschnitt im wesentlichen konstant hohe Schüttgutschicht 19, einen Anströmboden 20 mit einem mit den Fluidzuströmöffnungen 15 in Verbindung stehenden Fluidverteilraum 32 und mit einer einheitlichen Austragsvorrichtung 21 für verbrauchtes Schüttgut verschließbare Schüttgutabzugsrohre 22 sowie einen Sammelbunker 23 für abgezogenes Schüttgut auf. Einzelheiten dieses Wanderbettreaktors sind der Übersichtlichkeit halber nicht dargestellt und im übrigen aus der WO 8808746 sowie der DE-Patentanmeldung P 39 16 325.3 bekannt. Dies gilt insbesondere für den in Fig. 3 etwas detaillierter dargestellten Anströmboden 20 mit Schüttgutabzugstrichtern 24 bzw. -rinnen und mit Schüttgutdurchlaßöffnungen 25, die von dachförmigen Verteilelementen 26 derart abgedeckt sind, daß zumindest der zentrale, vorzugsweise der gesamte Flächenbereich der Schüttgutdurchlaßöffnungen 25 dachähnlich überdeckt ist. Die Verteilelemente 26 bilden zusammen mit den Seitenwänden der Schüttgutabzugstrichter 24 Schüttgutdurchtrittsöffnungen 27. Die Verteilelemente 26 stehen trichter- bzw. rinneninnenseitig von den Seitenwänden zum Trichterinneren bzw. Rinneninneren hin ab und sind über den Trichterumfang bzw. entlang der Rinne verteilt angeordnet, wobei in den Trichter- oder Rinnenseitenwänden Fluiddurchtrittsöffnungen 28 derart vorgesehen sind, daß das Fluid an den unteren Kanten der dachförmigen Verteilelemente 26 in die darüber gelegene Schüttgutschicht 19 eintritt, also definiert in der Ebene und durch den Querschnitt, den die Schüttgutdurchtrittsöffnungen 27 bilden. Unter dieser Durchtrittsebene verbreitert sich die für das Schüttgut zur Verfügung stehende Querschnittsfläche der Trichter 24 wieder, so daß unterhalb der dachförmigen Verteilelemente 26 relativ große freie Schüttgutoberflächen entstehen, welche freie Zusträmkanäle für das zuströmende Fluid sowie relativ große Kontaktflächen für einen ersten Kontakt zwischen dem Schüttgut und dem zuströmenden Fluid bilden (WO 8808746).

Die Fluidzuströmöffnungen 15 zu jedem Behandlungsreaktor 10 sind nun mit einem entsprechend große und entsprechend angeordnete Durchbrechungen aufweisenden Schieber 29 oder Klappe 30 bedarfsweise mit dem Gaseintrittskanal 13 verbindbar oder von diesem abtrennbar. Dabei weist jeder Behandlungsreaktor 10 eine eigenständig bewegbare Verschlußblende (Schieber 29 oder Klappe 30) auf.

Bei dem Ausführungsbeispiel gemäß Fig. 2 sind sieben der acht Schieber 29 in ihrer Position "offen", während der (in der Fig. 2 links oben befindliche) achte Schieber 29 sich in seiner Position "geschlossen" befindet, so daß in dem (letzteren) Behandlungsreaktor, dessen Fluidzuströmöffnungen 15 geschlossen sind, das Schüttgut innerhalb der Reaktionskammer abgesenkt werden, d. h. eine planparallele Schicht "verbrauchten" Schüttgutes abgezogen und eine entsprechende Menge Schüttgut von oben nachgeführt werden kann. Auf diese Weise wird sichergestellt, daß die Schüttgutschicht 19 von unerwünschten Bestandteilen wie Stäuben, verklebten und/oder zerbrochenen Schüttgutpartikeln u. dgl. weitestgehend freigehalten wird. - Während in den meisten Anwendungsfällen, z. B. durch vollständiges und, insbesondere, während der gesamten Zeitspanne des Schüttgutabziehens andauerndes Verschließen der Fluidzu- und/oder -abströmöffnungen, der Zustrom an zu behandelndem Fluid, vorzugsweise, völlig und während des gesamten Schüttgutabziehens aus der betroffenen Reaktionskammer "unterbrochen" werden wird, ist es im Sinne der erfindungsgemäß angestrebten Ziele grundsätzlich auch möglich bzw. kann es bereits ausreichend sein, den Strom an zu behandelndem Fluid durch die betroffene Reaktionskammer nur teilweise zu unterbrechen, also lediglich zu drosseln, und/oder während einer kürzeren als der gesamten Zeitspanne des Schüttgutabziehens zu unterbrechen bzw. zu drosseln. Das Drosseln wirkt sich vor allem bei Wanderbettreaktoren mit relativ wenigen parallel betrieben Reaktionskammern günstig aus.

Es hat sich gezeigt, daß das zeitweilige Absperren des Fluidstromes in einem oder wenigen der acht Behandlungsreaktoren keinen schädlichen Einfluß auf das Fluidbehandlungsergebnis hat, weil die Fluidgeschwindigkeit so gewählt werden kann, daß die Schüttgutpartikel auch bei einer entsprechend erhöhten Strömungsgeschwindigkeit nicht aus dem Behandlungsreaktor ausgetragen werden. Ferner hat sich gezeigt, daß bei der Verwendung der bevorzugten und im Zusammenhang mit Fig. 3 erläuterten Anströmböden die Erhöhung der Fluidgeschwindigkeit auch auf die Intensität und die Vollständigkeit der Fluidbehandlung keinen negativen Einfluß hat.

Mit den vorbeschriebenen Vorrichtungen ist es möglich, bereits naß gereinigte Rauchgase aus einer Müllverbrennungsanlage in einer einzigen Verfahrensstufe von verbliebenem HCl, SOₓ, NOₓ, Schwermetallen, insbesondere Hg, Dioxinen u. dgl., insbesondere unter Verwendung eines Herdofenkokses oder Steinkohlenaktivkokses im Umfang der gesetzlichen Bestimmungen - und auch noch gründlicher - zu befreien.

Wie schließlich aus Fig. 3, in der (der Deutlichkeit halber) lediglich zwei der vier (linken), gemäß Fig. 1 und 2 vorgesehenen, Behandlungsreaktoren dargestellt sind, ersichtlich, weisen die Schieber 29, die für jeden Behandlungsreaktor 10 getrennt voneinander ausgebildet und in Richtung des Doppelpfeiles A (getrennt) verschiebbar sind, mit den Fluidzuströmöffnungen 15 identische Durchbrechungen 33 auf. Die Durchbrechungen 33 und Fluidzuströmöffnungen 15 weisen denselben seitlichen Abstand voneinander auf, wobei die geschlossenen Flächen breiter als die offenen sind. Dies führt dazu, daß ein Verschieben eines Schiebers 29 um das halbe Öffnungs-Abstandsmaß zu einem völligen Verschließen (wie in Fig. 3 rechts dargestellt) bzw. einem völligen Öffnen (wie in Fig. 3 links dargestellt) führt.

Ferner ist aus Fig. 3 der Kegel des im Schüttgutvorratsbunker 17 vorhandenen Schüttgutvorrates 34 erkennbar.

Ferner ergibt sich aus Fig. 3, daß die aus der WO 8808746 bekannten Austragsvorrichtungen 21 jedes Behandlungsreaktors 10 durch ein Verbindungselement 35 miteinander verbunden sein können, so daß ein gemeinsames Betätigen dieser Austragsvorrichtungen in Richtung des Pfeiles B (siehe Fig. 1,2 und 4) möglich ist.

Schließlich ist in den Figuren ein unterhalb des Anströmbodens 20 vorgesehener Zwischenboden 36, durch den die Schüttgutabzugsrohre 22 hindurchgeführt sind, erkennbar. Hierdurch wird der Fluidverteilraum 32 von dem Sammelbunker 23 fluidisch abgesperrt.

Wie in den Figuren nicht im einzelnen dargestellt, kann der Fluidstrom entweder auf der Gaseintritts- und/oder auf der Gasaustrittsseite der Behandlungsreaktoren durch Schieber, Klappen od. dgl. abgesperrt bzw. gedrosselt werden.

### Bezugszeichenliste

- 10: Behandlungsreaktoren
- 11: Reaktionskammern
- 12: Wanderbettreaktor
- 13: Gaseintrittskanal
- 14: Gasaustrittskanal
- 15: Fluidzuströmöffnungen
- 16: Fluidabströmöffnungen
- 17: Schüttgutvorratsbunker
- 18: Schüttgutverteilboden
- 19: Schüttgutschicht
- 20: Anströmboden
- 21: Austragsvorrichtung
- 22: Schüttgutabzugsrohre
- 23: Sammelbunker
- 24: Schüttgutabzugstrichter
- 25: Schüttgutdurchlaßöffnungen
- 26: Verteilelemente
- 27: Schüttgutdurchtrittsöffnungen
- 28: Fluiddurchtrittsöffnungen
- 29: Schieber
- 30: Klappe
- 31: Fluidsammelraum
- 32: Fluidverteilraum
- 33: Durchbrechungen
- 34: Schüttgut
- 35: Verbindungselement
- 36: Zwischenboden

## Patentansprüche

1. Verfahren zum Behandeln von Fluiden mittels eines als Schüttgut vorliegenden Feststoffes, insbesondere im Gegenstromverfahren, bei dem wenigstens ein Schüttgut quasi kontinuierlich von oben nach unten durch Reaktionskammern wandert und, im Falle des Gegenstromverfahrens, mindestens ein Fluid kontinuierlich von unten nach oben durch die Schüttgutschicht in der Reaktionskammer strömt,
ein Wanderbettreaktor mit mehreren parallel zueinander betriebenen Reaktionskammern vorgesehen ist, bei dem die Fluidbehandlung gleichzeitig in allen Reaktionskammern mit einer vorgegebenen Fluidgeschwindigkeit erfolgt,
**dadurch gekennzeichnet**,
daß ein Schüttgutteilabzug und eine Schüttgutteilnachführung aus den bzw. in die Schüttgutschichten von Reaktionskammer zu Reaktionskammer zeitlich versetzt zueinander und lediglich während einer bezogen auf die Vorweildauer des Schüttgutes in der Reaktionskammer vergleichsweise kurzen Zeitspanne erfolgt, wobei
während der Phasen, in denen mehr oder minder verbrauchtes Schüttgut als Teilmenge von der Schüttgutschicht abgezogen und mehr oder minder frisches Schüttgut der Schüttgutschicht als Teilmenge zugeführt wird, der Strom an zu behandelndem Fluid durch die Schüttgutschicht der betreffenden Reaktionskammer gedrosselt oder unterbrochen wird und
der/die betreffende/n Fluidstrom/Fluidströme auf die übrigen Reaktionskammern unter Erhöhung der vorgegebenen Fluidgeschwindigkeit verteilt wird/werden.

2. Verfahren nach Anspruch 1, dadurch gekennzeichnet, daß das Fluid ein Rauchgas ist und aus dem Rauchgas insgesamt mehrere Komponenten, die z. B. aus NOₓ, SOₓ, HCl, Dioxinen und/oder Schwermetallen bestehen können, im trockenen Gegenstromverfahren mit Hilfe adsorptiv und/oder katalytisch wirkender Schüttgüter möglichst ganz oder zumindest teilweise entfernt werden, und daß der im trockenen Gegenstromverfahren durchzuführende Reinigungsschritt in einem einzigen (einstufigen) Verfahrensschritt mit Hilfe eines einzigen Schüttgutes erfolgt, wobei das Abziehen und Nachführen des einzigen Schüttgutes aus der bzw. in die Reaktionskammer in im wesentlichen planparallelen Schichten erfolgt.

3. Verfahren nach Anspruch 1 oder 2, gekennzeichnet durch die Verwendung eines Anströmbodens bestehend aus mindestens einem trichter- oder rinnenförmigen, eine oder mehrere mit Abstand zueinander angeordnete Schüttgutdurchlaßöffnungen aufweisenden Element, wobei
a) innerhalb jeden Trichters oder jeder Rinne dachförmige Verteilelemente derart angeordnet sind, daß sie zumindest den zentralen Flächenbereich der zugehörigen Schüttgutdurchlaßöffnung dachähnlich überdecken,
b) die Verteilelemente zusammen mit den Seitenwänden jedes Trichters oder jeder Rinne Schüttgutdurchtrittsöffnungen bilden und
c) die Verteilelemente trichterinnenseitig bzw. rinneninnenseitig von den Seitenwänden zum Trichterinneren bzw. zum Rinneninneren hin abstehen und über den Trichterumfang bzw. entlang der Rinne verteilt angeordnet sind.

4. Verfahren nach Anspruch 3, dadurch gekennzeichnet, daß in den Trichter- oder Rinnenseitenwänden Fluiddurchtrittsöffnungen angeordnet sind.

5. Verfahren nach einem der Ansprüche 1 bis 3, dadurch gekennzeichnet, daß das Abziehen von Schüttgut aus der Schüttgutschicht der Reaktionskammer in mindestens zwei nacheinander geschalteten Arbeitstakten erfolgt, wobei die in diesen einzelnen Arbeitstakten abgezogenen Schüttgutmengen voneinander getrennt werden.

6. Vorrichtung zum Durchführen des Verfahrens nach einem der Ansprüche 1 bis 5, bestehend aus mit einer Fluidzuführung und einer Fluidabführung versehenen Wanderbettreaktor (12), der unterteilt ist in mehrere, parallel im Gegenstromverfahren betreibbare Reaktionskammern (11) (Wanderbettreaktormodule) mit Verteilböden (18), Austragsvorrichtungen (21) zum absatzweisen Nachführen und Austragen von einzelnen Schüttgutschichten Fluidzuströmöffnungen (15) und Fluidabströmöffnungen (16) und taktweise und getrennt voneinander sowie zueinander zeitlich versetzt ganz oder teilweise öffen- und schließbaren Verschlußblenden (29; 30) für die Fluidzu- oder -abströmöffnungen (15, 16) oder beide Öffnungsarten zu und von den einzelnen Wanderbettreaktormodulen.

7. Vorrichtung nach Anspruch 6, dadurch gekennzeichnet, daß jeweils mehrere Behandlungsreaktoren (10) in zwei zueinander parallelen Reihen nebeneinanderstehen, daß beide Reihen durch Sammelkanäle in Gestalt eines unteren des Eintrittskanals (13) und eines darüberliegenden des Austrittskanals (15) voneinander getrennt sind, und daß die Sammelkanäle über Fluidzuströmöffnungen (15) und Fluidabströmöffnungen (16) mit den Behandlungsreaktoren (10) fluidisch verbunden sind.

8. Vorrichtung nach Anspruch 6 oder 7, dadurch gekennzeichnet, daß die Verschlußblenden als Schieber (29) ausgestaltet sind und mehrere Durchbrechungen (33) aufweisen, die mit den Fluiddurchtrittsöffnungen (15, 16) in und außer Deckung bringbar sind.

9. Vorrichtung nach Anspruch 8, dadurch geknnzeichnet, daß die seitlichen Abstände der Durchbrechungen (33) und der Fluiddurchtrittsöffnungen (15, 16) jeweils breiter als die offenen Flächen der Durchbrechungen (33) und/oder der Fluiddurchtrittsöffnungen (15, 16) sind.

## Claims

1. A process for treating fluids by means of a solid present as bulk material, in particular in the counterflow process, in which at least one bulk material moves virtually continuously downwards from above through reaction chambers and, in the case of the counterflow process, at least one fluid flows continuously upwards from below through the layer of bulk material in the reaction chamber,
a moving-bed reactor with a plurality of reaction chambers operated parallel to one another is provided, in which the fluid treatment takes place simultaneously in all the reaction chambers with a pre-determined speed of the fluid,
**characterized in that**
a partial removal of the bulk material and a partial replenishment of the bulk material from and into the layers of bulk material from reaction chamber to reaction chamber take place at staggered times and only during a comparatively short time relative to the dwell period of the bulk material in the reaction chamber, wherein
during the phases in which bulk material more or less used up is removed as a partial quantity from the layer of bulk material and more or less fresh bulk material is supplied as a partial quantity to the layer of bulk material, the flow of fluid to be treated through the layer of bulk material of the respective reaction chamber is throttled or interrupted, and
the respective flow or flows of fluid is or are distributed to the remaining reaction chambers while increasing the pre-determined speed of the fluid.

2. A process according to Claim 1, **characterized in that** the fluid is a flue gas, and several components, which can consist for example of NOₓ, SOₓ, HCl, dioxins and/or heavy metals, are removed completely if possible or at least in part in the dry counterflow process with the aid of bulk materials acting adsorptively and/or catalytically, and the purification step to be performed in the dry counterflow process takes place in a single (one-stage) method step with the aid of a single bulk material, wherein the removal and replenishment of the single bulk material from or into the reaction chamber take place in substantially plane-parallel layers.

3. A process according to Claim 1 or 2, **characterized by** the use of an inflow floor comprising at least one funnel-shaped or channel-shaped element provided with one or more spaced openings for the passage of the bulk material, wherein
a) roof-shaped distribution elements are arranged inside each funnel or channel in such a way that they cover at least the central surface area of the associated opening for the passage of the bulk material in a manner similar to a roof,
b) the distribution elements together with the lateral walls of each funnel or channel form openings for the passage of the bulk material, and
c) the distribution elements on the funnel or channel project from the lateral walls towards the interior of the funnel or channel and are arranged distributed over the periphery of the funnel or along the channel.

4. A process according to Claim 3, **characterized in that** openings for the passage of the fluid are arranged in the lateral walls of the funnel or channel.

5. A process according to one of Claims 1 to 3, **characterized in that** the removal of bulk material from the layer of bulk material in the reaction chamber takes place in at least two successive operating cycles, wherein the quantities of bulk material removed in these individual operating cycles are separate from one another.

6. A device for performing the process according to one of Claims 1 to 5, comprising [a] moving-bed reactor (12) which is provided with a fluid supply and a fluid outlet and which is divided into a plurality of reaction chambers (11) (moving-bed reactor modules) operable in parallel in the counterflow process with distribution floors (18), delivery devices (21) for the intermittent replenishment and delivery of individual layers of bulk material [and] fluid inflow openings (15) and fluid outflow openings (16) and closure screens (29; 30) - which can be opened and closed completely or in part in a clock-timed manner and separate from one another and offset in time from one another - for the fluid inflow or outflow openings (15, 16) or the two types of opening to and from the individual moving-bed reactor modules.

7. A device according to Claim 6, **characterized in that** a plurality of treatment reactors (10) are each arranged mutually adjacent in two mutually parallel rows, the two rows are separated from each other by collecting ducts in the form of a lower one of the entry duct (13) and one thereabove of the outlet duct (15), and the collecting ducts are connected with respect to the fluid to the treatment reactors (10) by way of fluid inflow openings (15) and fluid outflow openings (16).

8. A device according to Claim 6 or 7, **characterized in that** the closure screens are constructed as slides (29) and are provided with a plurality of perforations (33) which can be brought into and out of alignment with the openings (15, 16) for the passage of the fluid.

9. A device according to Claim 8, **characterized in that** the lateral gaps of the perforations (33) and the openings (15, 16) for the passage of the fluid are each wider than the open areas of the perforations (33) and/or of the openings (15, 16) for the passage of the fluid.

## Revendications

1. Procédé pour le traitement de fluides au moyen d'une matière solide se présentant en vrac, en particulier dans un procédé à contre-courant, où au moins une matière en vrac se déplace continuellement du haut vers le bas à travers des chambres de réaction et, dans le cas du procédé à contre-courant, au moins un fluide s'écoule continuellement du bas vers le haut à travers la couche de matière en vrac dans la chambre de réaction,
un réacteur à lit mobile avec plusieurs chambres de réaction fonctionnant en parallèle est prévu, dans lequel le traitement du fluide se produit simultanément dans toutes les chambres de réaction à une vitesse prédéterminée du fluide,
caractérisé en ce que
un retrait partiel de la matière en vrac et une amenée partielle de la matière en vrac de ou respectivement dans les couches de matière en vrac d'une chambre de réaction à une autre chambre de réaction se produit avec décalage dans le temps et uniquement pendant un intervalle de temps comparativement court en se rapportant à la durée de résidence de la matière en vrac dans la chambre de réaction, ce par quoi
pendant les phases dans lesquelles plus ou moins de matière en vrac usée est retirée en tant que quantité partielle de la couche de matière en vrac et plus ou moins de matière en vrac fraîche est conduite en tant que quantité partielle à la couche de matière en vrac, le courant du fluide à traiter à travers la couche de matière en vrac de la chambre de réaction correspondante est réduit ou interrompu et
le ou les écoulements de fluide correspondant (S) est ou sont répartis sur les chambres de réaction qui restent avec augmentation de la vitesse prédéterminée du fluide.

2. Procédé selon la revendication 1, caractérisé en ce que le fluide est un gaz de fumée et en ce que, du gaz de fumée, on élimine dans l'ensemble plusieurs composants qui, par exemple, peuvent se composer de NOₓ, SOₓ, HCl, des dioxines et/ou des métaux lourds, dans le procédé à contre-courant à sec à l'aide de matières en vrac ayant une action d'adsorption et/ou catalytique, si possible totalement ou au moins partiellement, et en ce que l'étape d'épuration à effectuer dans le procédé à contre-courant à sec se produit en une seule étape de procédé (un étage) à l'aide d'une seule matière en vrac, et le retrait et l'amenée de la seule matière en vrac de ou respectivement dans la chambre de réaction se produit en couches essentiellement planes et parallèles.

3. Procédé selon la revendication 1 ou 2, caractérisé par l'utilisation d'un fond d'afflux se composant d'au moins un élément en forme de trémie ou de goulotte, présentant une ou plusieurs ouvertures de passage de la matière en vrac agencées à une certaine distance les unes des autres, ce par quoi,
(a) à l'intérieur de chaque trémie ou de chaque goulotte, des éléments répartiteurs en forme de toit sont agencés de manière qu'ils couvrent, à la manière d'un toit, au moins la zone de surface centrale de l'ouverture de passage de la matière en vrac correspondante,
(b) les éléments répartiteurs forment, avec les parois latérales de chaque trémie ou de chaque goulotte, des ouvertures de passage de la matière en vrac et
(c) les éléments répartiteurs sont agencés au côté interne de la trémie ou respectivement au côté interne de la goulotte en dépassant des parois latérales vers l'intérieur de la trémie ou respectivement vers l'intérieur de la goulotte et en étant répartis sur le pourtour de la trémie ou respectivement le long de la goulotte.

4. Procédé selon la revendication 3, caractérisé en ce que dans les parois latérales de la trémie ou de la goulotte sont agencées des ouvertures de passage du fluide.

5. Procédé selon l'une des revendications 1 à 3, caractérisé en ce que le retrait de la matière en vrac hors de la couche de matière en vrac de la chambre de réaction se produit en au moins deux étapes de travail se suivant, ce par quoi les quantités de matière en vrac retirées dans ces étapes individuelles de travail sont séparées.

6. Dispositif pour la mise en oeuvre du procédé selon l'une des revendications 1 à 5 se composant d'un réacteur à lit mobile pourvu d'une arrivée de fluide et d'un départ de fluide (12) qui est réparti en plusieurs chambres de réaction (11) pouvant fonctionner en parallèle dans un procédé à contre-courant (module de réacteur à lit mobile) avec des fonds répartiteurs (18), des dispositifs de sortie (21) pour l'entrée et la sortie de façon interrompue de couches individuelles de matière en vrac, et des ouvertures (15) d'arrivée de fluide et des ouvertures (16) de sortie de fluide et des obturateurs (29 ; 30) pouvant être totalement ou partiellement ouverts et fermés en synchronisme et séparés les uns des autres ainsi que décalés dans le temps, pour les ouvertures d'amenée de fluide ou de départ de fluide (15, 16) ou bien les deux types d'ouvertures vers et hors des modules du réacteur à lit mobile.

7. Dispositif selon la revendication 6, caractérisé en ce qu'à chaque fois plusieurs réacteurs de traitement (10) sont prévus côte à côte en deux rangées parallèles, en ce que les deux rangées sont séparées par des canaux collecteurs ayant la forme d'un canal d'entrée (13) en dessous et d'un canal de sortie (15) par dessus et en ce que les canaux collecteurs sont en liaison de fluides des ouvertures d'amenée de fluide (15) et des ouvertures de départ de fluide (16) avec les réacteurs de traitement (10).

8. Dispositif selon la revendication 6, caractérisé en ce que les obturateurs ont la forme de coulisseaux (29) qui présentent plusieurs interruptions (33) qui peuvent être mises en et hors de recouvrement avec les ouvertures de passage du fluide (15, 16)

9. Dispositif selon la revendication 8, caractérisé en ce que les distances latérales des interruptions (33) et des ouvertures de passage du fluide (15, 16) sont plus larges que les surfaces ouvertes des interruptions (33) et/ou des ouvertures de passage du fluide (15, 16).
